# FASCICULE DE BREVET EUROPEEN

(11) **EP 3 047 722 B1**
(45) Date de publication et mention de la délivrance du brevet: **09.08.2017**
(21) Numéro de dépôt: 16150467.5
(22) Date de dépôt: 07.01.2016
(51) Int. Cl.: A01G 3/025, A01G 3/02

(54) **OUTIL DE COUPE A ENCLUME AMELIORE**
VERBESSERTES SCHNEIDEWERKZEUG MIT AMBOSS
IMPROVED CUTTING TOOL WITH ANVIL

(30) Priorité: 22.01.2015 FR 1550498
(43) Date de publication de la demande: 27.07.2016
(73) Titulaire: Deville SA, 49150 Baugé en Anjou (FR)
(72) Inventeur: ANGELOT, David, 49150 Saint Martin d'Arce (FR)
(74) Mandataire: Novagraaf Technologies

(56) Documents cités:
- GB-A- 930 390
- US-A- 1 877 376
- US-A- 2 528 815
- US-A- 3 372 478
- US-B1- 6 757 979

## Description

L'invention concerne le domaine des outils de coupe en particulier ceux comportant une enclume, telle que des élagueurs ou des sécateurs.

De manière classique, les outils de coupe comporte une mâchoire coupante permettent de placer l'objet à couper, par exemple une branche, entre les deux parties articulées de cette mâchoire coupante. Ces deux parties articulées sont formés d'une lame de coupe et d'une enclume comportant une face de coupe sur laquelle vient en appui, lors d'une coupe, une arête de coupe de la lame de coupe.

Sur les sécateurs ou les élagueurs, à l'usage, l'arête de coupe de la lame de coupe a tendance à venir s'imprimer sur la face de coupe de l'enclume ce qui réduit à la longue la qualité de coupe de l'outil. Le document GB 930 390 A décrit un élagueur à enclume comportant une came - un excentrique - formant butée réglable de la position fermée de coupe de l'outil, de sorte à prendre une continuité de positions de réglage. Un but de l'invention est de fournir un outil de coupe comportant une enclume permettant d'assurer dans le temps une qualité de coupe optimale.

A cette fin, il est prévu, selon l'invention, un outil de coupe comportant une enclume, une lame de coupe montée mobile à rotation selon un axe de rotation par rapport à l'enclume de sorte à ce qu'une arête coupante de la lame de coupe vienne en appui sur une face de coupe de l'enclume dans une position fermée de coupe de l'outil, et une came formant butée réglable de la position fermée de coupe de l'outil, cette came comportant des moyens de positionnement discret de sorte à prendre un ensemble de positions discrètes de réglage prédéterminées.

Avantageusement, mais facultativement, l'outil de coupe selon l'invention présente au moins l'une des caractéristiques techniques additionnelles suivantes :
- les moyens de positionnement discret comportent une série de trous aménagés sur une surface de la came formant butée ;
- les trous de la série de trous sont traversant une épaisseur de la came formant butée ;
- les moyens de positionnement discret comprennent un pion fixe agencé de sorte à coopérer avec les trous de la série de trous de sorte à maintenir une position discrète de réglage prédéterminée ;
- la came formant butée réglable est montée sur l'un parmi l'enclume et la lame de coupe, la came formant butée réglable comportant une surface de came agencée de sorte à venir en appui en au moins un point d'appui (P) sur l'autre parmi l'enclume et la lame ;
- le point d'appui (P) est choisi de sorte à ce que une distance minimale entre une direction d'un effort d'appui et une fixation de la came formant butée réglable sur l'un parmi l'enclume et la lame de coupe soit inférieure à une valeur seuil prédéterminée ;
- la surface de came est de forme cylindrique de révolution et est excentrée, la valeur seuil prédéterminée est une valeur d'excentration € de la surface de came ;
- l'enclume est comporte un porte-enclume et une pièce d'enclume comportant la face de coupe et montée de manière amovible sur le porte-enclume ;
- la came formant butée réglable et la lame de coupe sont situées de part et d'autre de l'axe de rotation de la lame de coupe par rapport à l'enclume ; et,
- l'outil de coupe est un élagueur.

D'autres caractéristiques et avantages de l'invention apparaitront lors de la description ci-après d'un mode de réalisation préféré d'un outil de coupe selon l'invention. Aux dessins annexés :
- la figure 1 est une vue de côté d'un outil de coupe selon l'invention;
- la figure 2 est une vue de face d'une came formant butée réglable de l'outil de coupe de la figure 1 ; et
- la figure 3 est une vue de coté de la came de la figure 2.

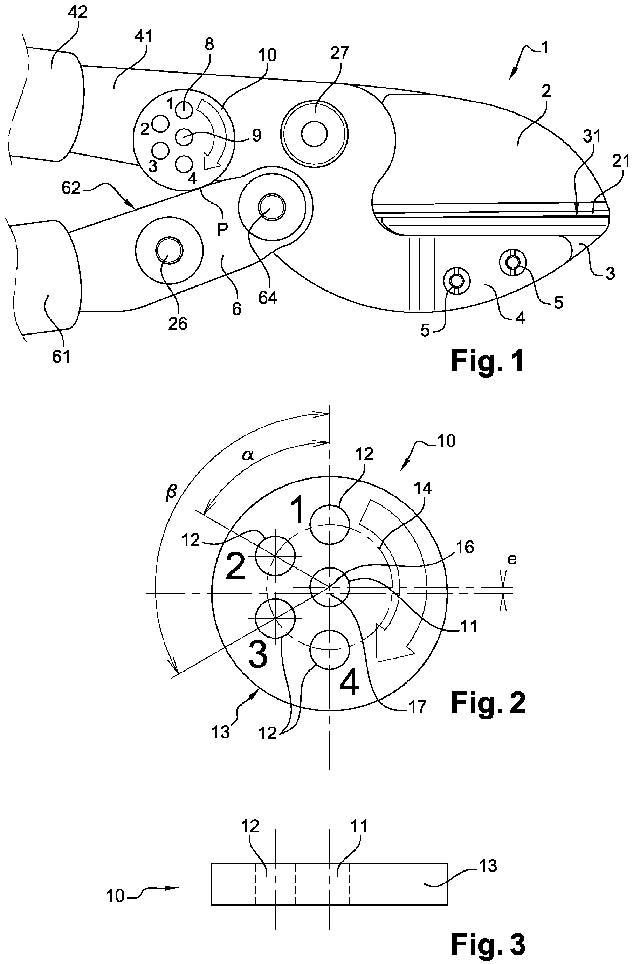

La figure 1 illustre un outil de coupe 1 selon l'invention.

D'une manière générale, l'outil de coupe 1 comprend deux organes 2 et 3,4 formant une mâchoire dans laquelle, lors e utilisation de l'outil de coupe 1, un matériau à couper est enserré pour être coupé.

En particulier, ces deux organes sont une lame 2 et un organe complémentaire 3,4, ici appelé une enclume, articulés entre eux, de manière à former la mâchoire coupante. Ces organes peuvent être écartés ou rapprochés l'un de l'autre, la coupe du matériau enserré se faisant lors de leur rapprochement.

Dans l'exemple ici illustré, il s'agit d'un élagueur à enclume 1, utilisé notamment pour sectionner des branches, par exemple lors de la taille d'un arbre.

La lame 2 et l'enclume 3,4 sont montées de manière pivotante autour d'un axe de rotation 27 commun, transversal par rapport à ces organes. La lame 2 présente une arête de coupe 21, destinée à couper les branches. L'enclume 3,4 comprend un porte-enclume 4 et une pièce d'enclume 3, présentant une face de coupe 31, ici plane, et s'étendant transversalement par rapport à la lame 2, notamment perpendiculairement à celle-ci. Le pivotement de lame 2 et de l'enclume 3,4, l'une par rapport à l'autre, va permettre de rapprocher l'arête de coupe 21 de la face de coupe 31. En variante de réalisation, la lame présente une arête de coupe courbe et l'enclume présente une face de coupe de forme complémentaire de l'arête de coupe de la lame.

Il est à noter que la pièce d'enclume 3 est montée et fixée de manière amovible sur le porte enclume 4 à l'aide de moyens de fixation 5, ici au nombre de deux. Ces moyens de fixation 5 peuvent être par exemple des vis, ou tout autre dispositif permettant un démontage de la pièce d'enclume 3 pour effectuer un remplacement de cette dernière si nécessaire.

Sur cette figure 1, le rapprochement s'est effectué jusqu'à ce que l'arête de coupe 21 soit en contact avec la face de coupe 31. La mâchoire coupante est ainsi en position fermée.

Pour améliorer la puissance de la coupe, la lame 2 et l'enclume 3,4 sont reliés à des manches, respectivement 61 et 42. L'utilisateur peut ainsi exercer la force de coupe avec les deux mains, chaque manche se saisissant avec l'une de ses mains.

De plus, pour renforcer la puissance de coupe, la partie tranchante de la lame 2, qui porte l'arête de coupe 21, et la partie de la lame reliée au manche 61 actionnant cette lame 2, sont réparties de part et d'autre de l'axe de rotation 27. De même, le porte-enclume 4 comprend une partie de maintien portant la pièce d'enclume 3, et une partie 41 reliée au manche 42 permettant de maintenir et d'actionner l'enclume 3,4. De nouveau, la partie de maintien portant la pièce d'enclume 3 et la partie 41 sont répartie de part et d'autre de l'axe de rotation 27. Cela permet de bénéficier de deux bras de leviers à la fois sur la lame et sur l'enclume.

En écartant les manches 42 et 61, la mâchoire s'ouvre et la branche à couper peut être placée entre la pièce d'enclume 3 et l'arête de coupe 21. Le rapprochement des manches 42 et 61 permet de sectionner la branche en maintenant celle-ci contre la face de coupe 31 de l'enclume 3,4 pendant la coupe.

Il est à noter que, ici, la lame 2 n'est pas directement montée sur le manche 61 qui permet de la manoeuvrer. En effet, une pièce intermédiaire 6 est prévue entre la lame 2 et le manche 61. Cette pièce intermédiaire 6 est montée mobile à rotation selon un axe de pivotement 64 avec le porte-enclume 4 au niveau d'une extrémité, l'autre extrémité de la pièce intermédiaire 6 étant emmanché dans le manche 61 de manière connue en soi. La pièce intermédiaire 6 comporte en outre une lumière traversante une épaisseur de ladite pièce intermédiaire 6 permettant de recevoir à rotation et à coulissement le long de la lumière un axe de liaison 26 avec la lame 2. Ainsi un mouvement de rotation imprimé via le manche 61 sur la pièce intermédiaire 6 autour de l'axe de pivotement 64 entraine la lame 2, via l'axe de liaison 26, dans un mouvement de rotation autour de l'axe de rotation 27.

D'autre part, l'outil de coupe 1 selon l'invention comporte une butée réglable permettant de définir le positionnement relatif de la lame 2 et de l'enclume 3,4 en position fermée (comme illustré en figure 1). Cette butée réglable est ici une came 10 montée sur la partie 41 du porte-enclume 4 entre l'axe de rotation 27 et le manche 42. Un moyen de serrage 9 permet de maintenir un positionnement de la came 10 sur le porte-enclume 4. Ce moyen de serrage 9 peut être par exemple une vis.

En référence aux figures 2 et 3, nous allons décrire plus en détail, la came 10 formant butée réglable. La came 10 est ici de forme cylindrique de révolution d'axe de révolution 17. La came 10 comporte, sur un flan latéral, une surface de came 13 de forme cylindrique de révolution d'axe de révolution 17. La came 10 comporte en outre un orifice 11 traversant une épaisseur de la came 10. L'orifice 11 est destiné à recevoir le moyen de fixation 9 de la came sur le porte-enclume 4. L'orifice 11 s'étend le long d'un axe 16 qui est parallèle à l'axe de révolution 11 et décalé d'une distance e de ce dernier. Cette distance e permet de réaliser une excentration lors du montage de la came 10 sur le porte-enclume 4. D'autre part, la came 10 comporte une série de trous 12, ici au nombre de quatre. Les trous 12 de la série de trous sont répartis selon un cercle 14 dont le centre est situé sur l'axe 16. Ici, les trous 12 sont traversant l'épaisseur de la came 10 et sont uniformément répartis sur un demi-cercle du cercle 14. Le premier trou et le dernier trou de la série de trous 12 sont situés sur un même diamètre du cercle 14 passant par l'axe de révolution 17. Les autres trous 12 sont positionnés à des angles α, β, etc... du premier trou de la série de trous 12. Ici, dans le mode de réalisation illustré en figure 2, α vaut 60° et β 120°.

Lors d'un montage, ou d'un réglage de la came 10 sur le porte-enclume 4, un pion de positionnement 8, monté à encastrement sur le porte-enclume 4, vient coopérer avec l'un des trous 12 de la série de trous de sorte à maintenir dans une position prédéterminée de réglage la came 10 formant butée réglable. Ainsi, le pion de positionnement 8, la série de trous 12 et le moyens de serrage 9 forment des moyens de positionnement discret de la came 10 de sorte à que cette dernière puisse prendre un ensemble de positions discrètes de réglage prédéterminées. Il y a autant de positions discrètes de réglage que de trous 12 dans la série de trous (ici au nombre de quatre).

Lors d'une utilisation de l'outil de coupe 1 selon l'invention, la surface de came 13 vient en appui contre une face latérale 62 de la pièce intermédiaire 6 en un point d'appui P. L'agencement de l'ensemble est effectué de sorte à choisir un positionnement du point d'appui P de telle manière qu'une distance minimale entre une direction d'un effort d'appui au point d'appui P et l'axe 16 du moyen de fixation 9 de la came 10 formant butée réglable soit inférieure à une valeur seuil prédéterminée, qui est ici la valeur de l'excentration e. Cela permet de minimiser au maximum les efforts qui auraient tendance à faire pivoter la came 10 autour de l'axe de fixation 16. Toutefois, les efforts d'appui générés lors de la mise en appui de la surface de came 13 sur la face latérale 62 de la pièce intermédiaire 6 sont repris à la fois par le moyen de fixation 9, mais surtout par le pion de positionnement 8. Un tel agencement permet de sécuriser au cours du temps, en utilisation de l'outil de coupe 1 selon l'invention, la position discrète de réglage choisie de la came 10 formant butée réglable.

En variante de réalisation, la came 10 et le pion de positionnement 8 sont montés sur la pièce intermédiaire 6 ou sur une partie coté manche 61 de la lame 2, la surface de came 13 venant en appui sur une face latérale de la partie 41 du porte-enclume 4.

Bien entendu, il est possible d'apporter à l'invention de nombreuses modifications sans pour autant sortir du cadre de celle-ci.

## Revendications

1. Outil de coupe (1) comportant une enclume (3,4), une lame (2,6) de coupe montée mobile à rotation selon un axe de rotation (27) par rapport à l'enclume de sorte à ce qu'une arête coupante (21) de la lame de coupe vienne en appui sur une face de coupe (31) de l'enclume dans une position fermée de coupe de l'outil, et une came (10) formant butée réglable de la position fermée de coupe de l'outil, **caractérisé en ce que** la came formant butée réglable comporte des moyens de positionnement discret (12,8,9) de sorte à prendre un ensemble de positions discrètes de réglage prédéterminées.

2. Outil de coupe selon la revendication 1, **caractérisé en ce que** les moyens de positionnement discret comportent une série de trous (12) aménagés sur une surface de la came formant butée.

3. Outil de coupe selon la revendication 2, **caractérisé en ce que** les trous de la série de trous sont traversant une épaisseur de la came formant butée.

4. Outil de coupe selon la revendication 2 ou 3, **caractérisé en ce que** les moyens de positionnement discret comprennent un pion fixe (8) agencé de sorte à coopérer avec les trous de la série de trous de sorte à maintenir une position discrète de réglage prédéterminée.

5. Outil de coupe selon l'une des revendications 1 à 4, **caractérisé en ce que** la came formant butée réglable est montée sur l'un (4) parmi l'enclume (3,4) et la lame (2,6) de coupe, la came formant butée réglable comportant une surface de came (13) agencée de sorte à venir en appui en au moins un point d'appui (P) sur l'autre (6) parmi l'enclume et la lame.

6. Outil de coupe selon la revendication 5, **caractérisé en ce que** le point d'appui (P) est choisi de sorte à ce que une distance minimale entre une direction d'un effort d'appui et une fixation de la came formant butée réglable sur l'un parmi l'enclume et la lame de coupe soit inférieure à une valeur seuil prédéterminée.

7. Outil de coupe selon la revendication 6, **caractérisé en ce que** la surface de came est de forme cylindrique de révolution et est excentrée, la valeur seuil prédéterminée est une valeur d'excentration (e) de la surface de came.

8. Outil de coupe selon l'une des revendications 1 à 7, **caractérisé en ce que** l'enclume comporte un porte-enclume (4) et une pièce d'enclume (3) comportant la face de coupe (31) montée de manière amovible sur le porte-enclume.

9. Outil de coupe selon l'une des revendications 1 à 8, **caractérisé en ce que** la came formant butée réglable et la lame de coupe sont situées de part et d'autre de l'axe de rotation de la lame de coupe par rapport à l'enclume.

10. Outil de coupe selon l'une des revendications 1 à 9, **caractérisé en ce que** l'outil de coupe est un élagueur.

## Patentansprüche

1. Schneidwerkzeug (1) umfassend einen Amboss (3, 4), eine Schneidklinge (2, 6), die im Verhältnis zum Amboss um eine Rotationsachse (27) drehbar montiert ist, sodass sich eine Schneidkante (21) der Schneidklinge in einer geschlossenen Schneidposition des Werkzeugs an eine Schneidfläche (31) des Amboss anlegt, und einen Nocken (10), der einen einstellbaren Anschlag für die geschlossene Schneidposition des Werkzeugs bildet, **dadurch gekennzeichnet, dass** der Nocken, der einen einstellbaren Anschlag bildet, Mittel zur diskreten Positionierung (12, 8, 9) umfasst, um eine Einheit von diskreten vorbestimmten Einstellpositionen einzunehmen.

2. Schneidwerkzeug nach Anspruch 1, **dadurch gekennzeichnet, dass** die Mittel zur diskreten Positionierung eine Reihe von Löchern (12) umfassen, die auf einer Oberfläche des Nockens angeordnet sind, der einen Anschlag bildet.

3. Schneidwerkzeug nach Anspruch 2, **dadurch gekennzeichnet, dass** die Löcher aus der Reihe von Löchern durch eine Dicke des Nockens, der einen Anschlag bildet, durchgehend sind.

4. Schneidwerkzeug nach Anspruch 2 oder 3, **dadurch gekennzeichnet, dass** die Mittel zur diskreten Positionierung einen festen Stift (8) umfassen, der angeordnet ist, um mit den Löchern aus der Reihe von Löchern zusammenzuwirken, um eine diskrete vorbestimmte Einstellposition zu halten.

5. Schneidwerkzeug nach einem der Ansprüche 1 bis 4, **dadurch gekennzeichnet, dass** der Nocken, der einen einstellbaren Anschlag bildet, auf einem (4) aus dem Amboss (3, 4) und der Schneidklinge (2, 6) montiert ist, wobei der Nocken, der einen einstellbaren Anschlag bildet, eine Nockenoberfläche (13) umfasst, die angeordnet ist, um sich an zumindest einen Anlegepunkt (P) auf dem anderen (6) aus dem Amboss und der Schneidklinge anzulegen.

6. Schneidwerkzeug nach Anspruch 5, **dadurch gekennzeichnet, dass** der Anlegepunkt (P) derart ausgewählt wird, dass ein Mindestabstand zwischen einer Richtung einer Anlegekraft und einer Befestigung des Nockens, der einen einstellbaren Anschlag bildet, auf dem einen aus dem Amboss und der Schneidklinge kleiner ist, als ein vorbestimmter Grenzwert.

7. Schneidwerkzeug nach Anspruch 6, **dadurch gekennzeichnet, dass** die Nockenoberfläche eine rotationszylindrische Form aufweist und exzentrisch ist, wobei der vorbestimmte Grenzwert ein Mittenabweichungswert (e) der Nockenoberfläche ist.

8. Schneidwerkzeug nach einem der Ansprüche 1 bis 7, **dadurch gekennzeichnet, dass** der Amboss einen Ambosshalter (4) und ein Ambossteil (3) umfasst, welches die Schneidfläche (31) umfasst, die in abnehmbarer Form auf dem Ambosshalter montiert ist.

9. Schneidwerkzeug nach einem der Ansprüche 1 bis 8, **dadurch gekennzeichnet, dass** sich der Nocken, der einen einstellbaren Anschlag bildet, und die Schneidklinge beiderseits der Rotationsachse der Schneidklinge im Verhältnis zum Amboss befinden.

10. Schneidwerkzeug nach einem der Ansprüche 1 bis 9, **dadurch gekennzeichnet, dass** das Schneidwerkzeug eine Astschere ist.

## Claims

1. Cutting tool (1) comprising an anvil (3, 4), a cutting blade (2, 6) mounted mobile in rotation about an axis of rotation (27) with respect to the anvil in such a way that a cutting edge (21) of the cutting blade bears against a cutting face (31) of the anvil in a closed cutting position of the tool, and a cam (10) forming an adjustable abutment of the closed cutting position of the tool, **characterised in that** the cam forming the adjustable abutment comprises discrete positioning means (12, 8, 9) is such way as to take a set of predetermined discrete positions of adjustment.

2. Cutting tool according to claim 1, **characterised in that** the discrete positioning means comprise a series of holes (12) made on a surface of the cam forming an abutment.

3. Cutting tool according to claim 2, **characterised in that** the holes of the series of holes are passed through by a thickness of the cam forming an abutment.

4. Cutting tool according to claim 2 or 3, **characterised in that** the discrete positioning means include a fixed pin (8) arranged so as to cooperate with the holes of the series of holes in such a way as to maintain a predetermined discrete adjusting position.

5. Cutting tool according to one of claims 1 to 4, **characterised in that** the cam forming an adjustable abutment is mounted on one (4) among the anvil (3, 4) and the cutting blade (2, 6), with the cam forming an adjustable abutment comprising a cam surface (13) arranged in such a way as to bear against at least one bearing point (P) on the other (6) among the anvil and the blade.

6. Cutting tool according to claim 5, **characterised in that** the bearing point (P) is chosen in such a way that a minimum distance between a direction of a bearing force and a fastening of the cam forming an adjustable abutment on one among the anvil and the cutting blade are less than a predetermined threshold value.

7. Cutting tool according to claim 6, **characterised in that** the cam surface is of a cylindrical revolution shape and is offset, the predetermined threshold value is an out-of-round value (e) of the cam surface.

8. Cutting tool according to one of claims 1 to 7, **characterised in that** the anvil comprises an anvil holder (4) and an anvil part (3) comprising the cutting face (31) removably mounted on the anvil holder.

9. Cutting tool according to one of claims 1 to 8, **characterised in that** the cam forming an adjustable abutment and the cutting blade are located on either side of the axis of rotation of the cutting blade with respect to the anvil.

10. Cutting tool according to one of claims 1 to 9, **characterised in that** the cutting tool is a trimmer.
